# EUROPEAN PATENT APPLICATION

(11) **EP 2 584 420 A1**
(43) Date of publication of application: **24.04.2013**
(21) Application number: 11185548.2
(22) Date of filing: 18.10.2011
(51) Int. Cl.: G05B 23/02, F17D 5/00

(54) **Flow monitoring of a subsea pipeline**

(71) Applicant: Vetco Gray Controls Limited, Bristol BS48 1BS (GB)
(72) Inventor: Ellson, Nicholas, Bristol, BS3 2DJ (GB); Holley, Stuart Guy, Bristol, BS3 3BL (GB)
(74) Representative: Emerson, Peter James

(57) **Abstract**

A method of monitoring a flow spool pipe (13) in a subsea hydrocarbon extraction well facility comprises: providing a plurality of sensors (1, 4); sensing parameters relating to the flow spool pipe using the sensors; receiving signals from the sensors as a result of said sensing to produce data relating to the parameters; and analysing the data.

## Description

### Field of the Invention

The present invention relates to flow spool monitoring.

### Background of the Invention

In offshore subsea oil and gas wells there is a requirement to ensure the optimised control and flow of fluid from the well throughout its lifetime, which may be up to 30 years. For deep water wells the cost of intervention to repair or replace equipment such as failed fluid pipelines, can be very expensive, time consuming and may well mean lost production during the down time.

Pipeline failure and impeded fluid flow can be caused by a variety of causes such as:
Pipeline corrosion which is the root cause of many failures in deep water operations.
Fatigue due to mechanical stress, strain, shock and vibration.
Hydrate build up.
Wax or paraffin build up.
Slugs or anomalous flow.
Multiphase flow.

Mitigation techniques can be used to minimise many of these effects, provided that there is early detection of the symptoms. This requires real time knowledge of the condition of the pipelines and of the content of the fluid flowing through pipelines. Pipeline monitoring technology has been developed, proven and deployed offshore in deepwater environments using available sensors which can be used in conjunction with the latest signal processing and data acquisition equipment to provide the required pipeline state of health information and predict the onset of problems. This information can be used to select mitigation techniques such as chemical injection techniques to reduce hydrate build up.

An example of fluid pipelines which can be subject to pipeline corrosion, wear and tear, which can be subject to hydrate or wax build-up, etc. and which have no condition monitoring are flow spools. These are essentially short runs of pipes carrying production fluid which, typically are used to connect components such as choke valves, which are installed on the subsea Christmas tree, and a well manifold. Because of their positioning, these pipe runs often have multiple bends along them to allow for subsea connection and alignment within manufacturing tolerances. These pipes are often subject to problems for reasons such as the following.

They are often only supported at each end.

They are subjected to varying loads due to slugs, temperature changes, tides and currents and pressure variations, etc. These loads can cause vibration and fatigue and in the extreme case plastic deformation or failure of the spool, spools being particularly susceptible to slugs due to their shape.

Due to the bends in the flow spool they are subject to erosion and corrosion.

Due to the shapes of the spools and their manufacturing process, their pipe walls will not be consistent at the bends (both in thickness and material properties).

Due to misalignment of subsea components, flow spools can be subjected to static loads from the time of installation. Due to the settling of components during field life these loads can change. These static loads will affect the total strain (caused by a combination of internal pressure, cyclic loading from above, stress concentrations due to manufacture and eroded pipe walls, etc.).

Currently these flow spools are not monitored, which can lead to either risk of failure or conservative operation.

As prior art in the field of condition monitoring, there may be mentioned GB-A-2 473 640 and W02008/048110.

### Summary of the Invention

According to this invention from one aspect there is provided a method of monitoring a flow spool pipe in a subsea hydrocarbon extraction well facility, the method comprising:
providing a plurality of sensors;
sensing parameters relating to the flow spool pipe using said sensors;
receiving signals from the sensors as a result of said sensing to produce data relating to said parameters; and
analysing said data.

According to this invention from another aspect, there is provided an arrangement for monitoring a flow spool pipe in a subsea hydrocarbon extraction well facility, comprising:
a plurality of sensors for sensing parameters relating to the flow spool pipe;
means for receiving signals from the sensors as a result of said sensing to produce data relating to said parameters; and
means for analysing said data.

At least one of said sensors could be at a wall of said pipe and sense a parameter of the pipe. In this case, said at least one of said sensors at the pipe wall could sense one of pipe wall thickness, pipe temperature, pipe strain and pipe vibration.

At least one of said sensors could sense a parameter of fluid in said pipe. In this case, said at least one of said sensors which senses a parameter of fluid in said pipe could sense one of fluid temperature, fluid pressure and any other parameter of such fluid.

Said analysing could occur at a topside installation of the facility. In this case, said data could be sent to said topside installation via underwater equipment which receives said data or directly from said receiving means.

Said analysing could comprise using said data and a behaviour model of the flow spool pipe to determine the effect of at least one of said parameters on the flow spool pipe. In this case, said analysing could comprise determining the remaining life or risk of failure of said flow spool pipe under the prevailing operational conditions and/or determining properties of the fluid in the flow spool pipe.

### Brief Description of the Drawing

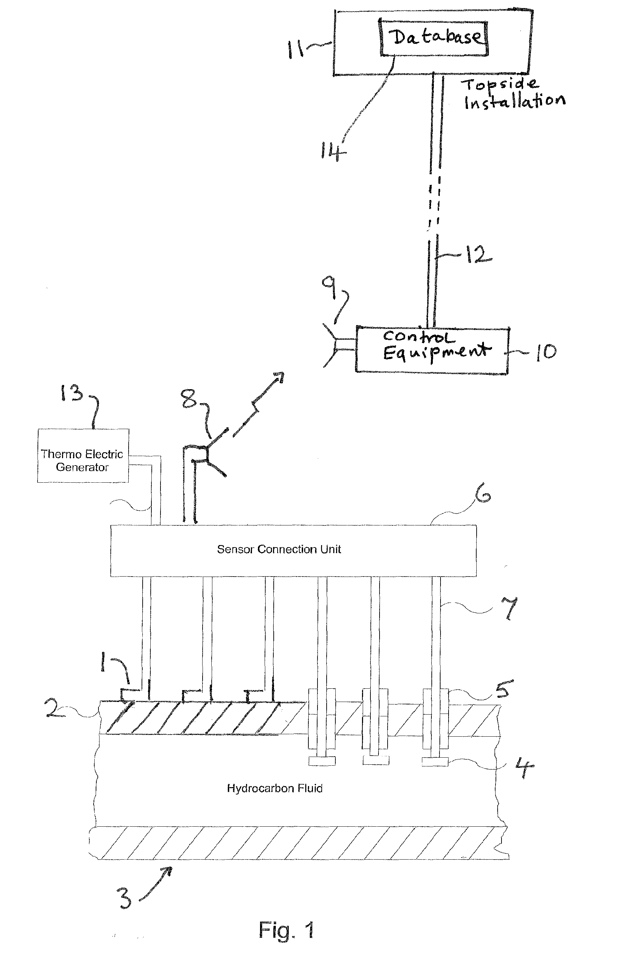

Fig. 1 is a diagram of a system according to an embodiment of the invention.

### Description of an Embodiment of the invention.

A flow spool pipe, which is essentially a flow pipe carrying hydrocarbon fluid, is physically a few metres in length having a plurality of bends, which bends are typically sharp bends. Fig. 1 is an illustration showing the main components and connections of a suitable flow spool pipe sensor arrangement.

The flow spool pipe sensor arrangement comprises two sensor parts:
sensors 1 on the surface of pipe wall 2 of a flow spool pipe 3. The flow spool pipe 3 is in a subsea hydrocarbon production well facility and sensors 1 are permanently installed,
integrated on to the pipe wall 2, sensors 1 measuring the pipe wall thickness, pipe temperature, strain and vibration for example; and
discrete sensors 4, which are positioned in the hydrocarbon fluid flow in the flow spool pipe 3 and are retrievable by the use of suitable wet-mate connectors 5, and typically measure the fluid pressure, the fluid temperature and other fluid properties, such as the build up of liquid at the bottom of the spool pipe and the build up of slugs.

The sensors 1 could be retrievable and/or the arrangement of the flow spool pipe 3 and the sensors 1 and 4 could itself be retrievable. Although two groups of sensors are described, just one group (just sensors 1 or just sensors 3 could be used, although the former is preferred).

The sensors 1 and 4 are connected to a sensor connection unit 6 by cables 7, with wet-mate connectors at each end and which are suitable for the subsea environment. Unit 6 converts the signals from the sensors into a data format suitable for transmission using an acoustic hydrophone 8 which transmits the data through the water to a receiving hydrophone 9 positioned on the facility's subsea control equipment 10 on a Christmas tree, for example, from where it can be subsequently transmitted to a topside installation 11 for analysis via an umbilical cable 12 of the facility. Alternatively, the data from the sensors could be transmitted to equipment 10 by any other form of suitable wireless data transfer, such as by optical transmission, by radio or by electromagnetic transmission along a metallic structure. The data could be sent directly to the topside installation 11, bypassing the subsea control equipment 10 and umbilical cable 12.

The sensor connection unit 6 can be provided with its own electrical power from a thermoelectric generator 13 which is physically installed around the flow spool pipe 3 and which utilises the temperature difference between the hydrocarbon fluid in the flow spool pipe and seawater to generate the few Watts of electrical energy required by the sensor arrangement. This will enable the flow spool arrangement to be independent of the rest of the equipment and could be installed and replaced more easily as there are no electrical connections to the main subsea control equipment 10. Alternatively, for signal transfer to the subsea control equipment 10, traditional jumper technology could be used, the sensor arrangement being wired into the control system for power and communications.

The data received topside is typically used as follows. A database 14 at the topside installation stores a behaviour or life model of the flow spool pipe as regards parameters during its use which affect its life. The transferred data, relating to measurements of parameters relating to the flow spool pipe, such as strain (which can be used to calculate stress), vibration, temperature of the pipe wall and fluid and any other parameter affecting the life of the flow spool pipe are taken into the model to determine the effect of one or more of the parameters on the life of the flow spool or the risk of failure. The model can then be used to determine the remaining life (or risk of failure) under the same or altered operating patterns so that the operating regime can be changed appropriately.

Also, based on such measurements, properties of the fluid in the flow spool pipe can be determined - that is strain the flow spool pipe is related to the mass of the fluid in it and hence the bulk (average) density. From sensed temperature and pressure with known fluid properties, the proportions of gas and liquid can be estimated.

### Advantages of using the Invention

The above arrangement could result in the following technical advantages.

Mitigation of potential environmental contamination from flow spool pipe failure.

Enhancement of flow spool pipe lifetime resulting from monitoring and mitigating against damage.

Sensor measurements can be used to determine the dynamic loading of the flow spool pipe and provide warnings against fatigue or plastic deformation.

The independent, discrete measurement points can be available to Finite element models to provide holistic stress and strain estimates which can be used in fatigue life models.

The cyclic loads from slug events can be used to estimate the size of slugs which could be used to prepare larger slug catchers or separators or gas lift devices further downstream (in combination with the same measurements from other flow spool pipes or wells in the field).

The steady state load can be used to estimate the liquid hold-up in the flow spool pipe, which in turn can be used to determine monoethylene glycol or other hydrate inhibitor requirements during a shut down and also prevent slugs through variation of flow rates etc.

Better operation of a field (safety, optimisation, knowledge of liquid hold up, etc).

Avoidance of costly downtime, i.e. the cost of subsea inspection and intervention and the reduction of lead times for replacement items, due to the failure prediction capability of the monitoring arrangement.

## Claims

1. A method of monitoring a flow spool pipe in a subsea hydrocarbon extraction well facility, the method comprising:
providing a plurality of sensors;
sensing parameters relating to the flow spool pipe using said sensors;
receiving signals from the sensors as a result of said sensing to produce data relating to said parameters; and
analysing said data.

2. A method according to claim 1, wherein at least one of said sensors is at a wall of said pipe and senses a parameter of the pipe.

3. A method according to claim 2, wherein said at least one of said sensors at the pipe wall senses one of pipe wall thickness, pipe temperature, pipe strain and pipe vibration.

4. A method according to any preceding claim, wherein at least one of said sensors senses a parameter of fluid in said pipe.

5. A method according to claim 4, wherein said at least one of said sensors which senses a parameter of fluid in said pipe senses one of fluid temperature and fluid pressure.

6. A method according to any preceding claim, wherein said analysing occurs at a topside installation of the facility.

7. A method according to claim 6, wherein said data is sent to said topside installation via underwater equipment which receives said data.

8. A method according to any preceding claim, wherein said analysing comprises using said data and a behaviour model of the flow spool pipe to determine the effect of at least one of said parameters on the flow spool pipe.

9. A method according to claim 8, wherein said analysing comprises determining the remaining life or risk of failure of said flow spool pipe under the prevailing operational conditions.

10. A method according to claim 8 or 9, wherein said analysing comprises determining properties of the fluid in the flow spool pipe.

11. An arrangement for monitoring a flow spool pipe in a subsea hydrocarbon extraction well facility, comprising:
a plurality of sensors for sensing parameters relating to the flow spool pipe;
means for receiving signals from the sensors as a result of said sensing to produce data relating to said parameters; and
means for analysing said data.

12. An arrangement according to claim 11, wherein at least one of said sensors is at a wall of said pipe and senses a parameter of the pipe.

13. An arrangement according to either of claims 11 and 12, wherein at least one of said sensors senses a parameter of fluid in said pipe.

14. An arrangement according to any of claims 11 to 13, wherein said analysing means is at a topside installation of the facility.

15. An arrangement according to any of claims 11 to 14, wherein said analysing means is adapted for using said data and a behaviour model of the flow spool pipe to determine the effect of at least one of said parameters on the flow spool pipe.
